# EUROPEAN PATENT APPLICATION

(11) **EP 1 338 817 A1**
(43) Date of publication of application: **27.08.2003**
(21) Application number: 03100130.8
(22) Date of filing: 22.01.2003
(51) Int. Cl.: F16D 69/02

(54) **Non-asbestos-based friction materials**

(30) Priority: 21.02.2002 JP 2002044121
(71) Applicant: Nisshinbo Industries, Inc., Chuo-ku, Tokyo 103-8650 (JP)
(72) Inventor: Nagata, Takeo, Nisshinbo Industries, Inc., Oura-cho, Oura-gun, Gunma, 370-0614 (JP); Takeuchi, Kazuhiro, Nisshinbo Industries, Inc., Oura-cho, Oura-gun, Gunma, 370-0614 (JP)
(74) Representative: Courgeon, Antoine

(57) **Abstract**

It is an object of the present invention to provide non-asbestos-based friction materials for brakes, clutches or the like for automobiles, large-size trucks, railway cars and various industrial machines, characterized in that it causes no cancer or pneumoconiosis (in particular silicosis) in humans, has excellent friction and rust-proof performance, and lower tendency of counter surface attack.

The present invention provides non-asbestos-based friction materials made by molding and curing a composition comprising, as the major components, a fibrous base, binder and filler, wherein the fibrous base has a length of 5µm or more and diameter of 3µm or less; is free of inorganic fibers having an aspect ratio (fiber length/fiber diameter) of above 3; and contains chopped strands of amorphous silica, 1mm or more but less than 3mm long and 6µm or more but less than 10µm in diameter.

## Description

### BACKGROUND OF THE INVENTION

### FIELD OF THE INVENTION

This invention relates to non-asbestos-based friction materials to be used for brakes, clutches or the like for automobiles, large-size trucks, trains and various industrial machines, and more particularly, the friction materials to be used for brakes, clutches or the like for automobiles, large-sized trucks, trains and various industrial machines, and causing no carcinogenesis or pneumoconiosis (in particular silicosis) in humans, having excellent friction and rust-proof performance, and lower tendency of counter surface attack.

### DESCRIPTION OF THE PRIOR ART

The friction members for disk brake pads, brake shoes, clutch plates or the like for automobiles or the like are composed of friction materials to which an iron-based back material is attached to form the monolithic structure. These friction members generate a frictional force when subject to a relative motion there between, e.g., with the disk rotor or clutch plate it faces while being pressed by them, to put the brake on an automobile or transmit an engine's driving force to the wheels.

Therefore, friction materials should satisfy various requirements, e.g., high resistance to wear, high and stable coefficient of friction, high resistance to fade to have coefficient of friction not rapidly deteriorated at high temperature, generating little abnormal sound, e.g., squeal, when the brake is applied, and lower counter surface (hereinafter sometimes referred to as rotor) attack.

Various materials have been proposed for frictional members in automobiles or the like to realize excellent frictional performance and prevent abnormal sound. These materials include those containing inorganic powders or fibers. Those containing an inorganic powder include the one containing silicon dioxide (silica) in the matrix to improve wear resistance of the friction materials (Japanese Patent Laid-open Publication No.58-183781). Those containing silica fibers include the one containing ceramic fibers of at least two dissimilar materials selected from the group consisting of alumina, silica and zirconia, where at least part of the ceramic fibers comprise spherical and band-shaped blocks which account for a specific percentage on the shear plane of the friction member (Japanese Patent Laid-open Publication No.2000-319409). Use of the ceramic fibers is intended to improve braking efficiency, control wear of the rotor and prevent abnormal sound when the brake is applied.

However, silica powder, although hard and effective for improving friction performance, involves disadvantages, e.g., significantly large counter surface attack and generating abnormal sound when the brake is applied. Use of crystalline silica, which has been serving as the fibrous base, is being prohibited on the grounds that it can possibly cause cancer or pneumoconiosis (in particular silicosis). As a matter of fact, number of countries which have prohibited crystalline silica is increasing. Moreover, some inorganic fibers having a specific shape, e.g., needle-shape crystal (whisker) have been under discussion for their possible carcinogenesis.

### SUMMARY OF THE INVENTION

It is an object of the present invention to provide non-asbestos-based friction materials for brakes, clutches or the like for automobiles, large-size trucks, trains and various industrial machines, characterized in that it causes no carcinogenesis or pneumoconiosis (in particular silicosis) in humans, has excellent friction and rust-proof performance, and lower counter surface attack, in consideration of the problems involved in the conventional techniques.

The inventors of the present invention have found, after having extensively studied to overcome the problems involved in the conventional techniques, that non-asbestos-based friction materials has various excellent characteristics, e.g., in friction and rust-proof performance, and controlling counter surface attack and prevention of abnormal sound when the brake is applied, when the fibrous base as the major base for the non-asbestos-based friction materials contains no inorganic fibers of specific shape or crystalline silica, which is considered to possibly cause carcinogenesis or pneumoconiosis (in particular silicosis) in humans, but contains an adequate content of amorphous silica having no crystalline structure, which is accepted to cause no silicosis or carcinogenesis, in the form of chopped strand, which is accepted to be harmless, achieving the present invention.

The first aspect of the present invention is non-asbestos-based friction materials produced by forming and curing non-asbestos-based friction materials composition comprising, as the major components, a fibrous base, binder and filler, wherein the fibrous base has a length of 5µm or more and diameter of 3µm or less; is free of inorganic fibers having an aspect ratio (fiber length/fiber diameter) of above 3; and contains chopped strands of amorphous silica, 1mm or more but less than 3mm long and 6µm or more but less than 10µm in diameter.

The second aspect of the present invention is the non-asbestos-based friction materials of the first aspect, wherein the chopped strands of amorphous silica are contained at 1 to 16% by volume on the whole friction materials.

The third aspect of the present invention is the non-asbestos-based friction materials of the first or second aspect, wherein the amorphous silica contains alumina and sodium oxide as impurities at below 5% and below 0.5%, respectively.

The present invention provides, as described above, non-asbestos-based friction materials produced by forming and curing non-asbestos-based friction materials composition comprising, as the major components, a fibrous base, binder and filler, wherein the fibrous base is free of inorganic fibers having a specific shape and contains chopped strands of amorphous silica. The preferred embodiments include the following materials.
(1) The non-asbestos-based friction materials of one of the above aspects, wherein the binder is of a thermosetting resin.
(2) The non-asbestos-based friction materials of one of the above aspects, wherein each of the fibrous base and filler is free of crystalline silica.

### DETAILED DESCRIPTION OF THE INVENTION

The present invention is described in detail for each item.

### 1. Fibrous base

The non-asbestos-based friction materials of the present invention comprises a fibrous base, binder and filler as the major components, wherein the fibrous base has a length of 5µm or more and diameter of 3µm or less; is free of inorganic fibers having an aspect ratio (fiber length/fiber diameter) of above 3; and contains chopped strands of amorphous silica, 1mm or more but less than 3mm long and 6µm or more but less than 10µm in diameter.

### (1) Amorphous silica

In the non-asbestos-based friction materials of the present invention, chopped strands of amorphous silica, 1mm or more but less than 3mm long and 6µm or more but less than 10µm in diameter, are used for the fibrous base.

Unlike crystalline silica, which International Agency for Research on Cancer (IARC) has recognized to be probably carcinogenic to humans (Group 2A), amorphous silica is accepted not to cause carcinogenesis or silicosis in humans, and chopped strands of amorphous silica, 1mm or more but less than 3mm long and 6µm or more but less than 10µm in diameter, are used in the present invention. Use of amorphous silica of specific shape and dimensions for the chopped strands makes various characteristics of the friction materials (in particular shear strength and prevention of abnormal sound when the brake is applied) more excellent. In particular, chopped strands of amorphous silica are more resistant to heat than those of glass or rock wool (around 1500 versus 850°C), and hence more excellent in frictional characteristics at high temperature. Moreover, amorphous silica is superior to crystalline silica in that it is less hard, and hence less counter surface attack. The present invention uses amorphous silica having a melting point of around 1500°C as an index of heat resistance.

Use of amorphous silica not in the form of whisker but chopped strand of specific shape and dimensions reduces harm by the suspended particulate (of fine particles of around 10µm or less-it is accepted that the particles of 1µm or less deposit on the air vesicles), and, moreover, makes the friction materials harmless to humans, because it will no longer cause silicosis or carcinogenesis.

The amorphous silica for the present invention contains alumina and sodium oxide as impurities at below 5% and below 0.5%, respectively. Alumina may deteriorate the property of preventing counter surface attack, when present excessively. Oxides, e.g., that of sodium, may deteriorate heat resistance of the friction materials, when present excessively. Therefore, controlling their contents below the above levels reduces counter surface attack, and improves its heat resistance and stabilizes its friction coefficient.

The chopped strands of amorphous silica for present invention are contained at 1 to 16% by volume on the whole friction materials. At a content below 1%, the friction characteristics of the friction materials may not be improved. At above 16%, on the other hand, counter surface attack may be increased.

### (2) Other Fibrous Component

The fibrous component other than the chopped strands of amorphous silica may be used for the fibrous base for the non-asbestos-based friction materials of the present invention. However, inorganic fibers of needle-shape crystal (whisker) of specific dimensions, i.e., length of 5µm or more, diameter of 3µm or less and aspect ratio (fiber length/fiber diameter) of above 3, shall not be used for the present invention because of its possible carcinogenesis.

The other fibrous components useful for the present invention include the inorganic and organic fibers commonly used for friction materials, other than those of asbestos.

Of these fibers for the fibrous base, the relatively hard ones include synthesized mineral, natural mineral, glass and metallic fibers, and relatively soft ones include Aramid, carbon, cellulosic and acrylic fibers. They may be used either individually or in combination. Of these, Aramid fibers are more preferable.

The synthesized mineral fibers include rock wool, slag wool and magnesium sulfate fibers.
The natural mineral fibers include those of wollastonite and sepiolite.

The metallic fibers include those of a variety of metals, e.g., steel, stainless steel, bronze, copper, brass and aluminum.

In the present invention, the materials useful for the fibrous base other than chopped strands of amorphous silica are in the short fiber, pulp-shaped or powdery form. Content of each of these materials is not limited, and adequately selected depending on type of the specific fibrous base component. However, it is normally around 5 to 90% by volume based on the whole non-asbestos-based friction materials composition, preferably 20 to 70%.

### 2. Binders

The binder for the non-asbestos-based friction materials of the present invention is selected from the known ones normally used for friction materials. They include thermosetting resins, e.g., phenolic, epoxy, urea and melamine resin and modifications thereof; heat-resistant resins, e.g., polyacetal, aromatic polyimide and fluorine resin; and NBR. They may be used either individually or in combination.

Its content is not limited for the present invention, and adequately selected depending on type of the specific binder component. However, it is normally around 5 to 50% by volume based on the whole non-asbestos-based friction materials composition, preferably 10 to 25%.

### 3. Fillers

The filler component for the non-asbestos-based friction materials of the present invention is selected from the known ones commonly used for friction materials, inorganic or organic. They include molybdenum disulfide, antimony trisulfide, calcium carbonate, barium sulfate, magnesium oxide, cashew dust, graphite, calcium hydroxide, calcium fluoride, talc, molybdenum trioxide, antimony trioxide, zirconium silicate, iron oxide, mica, iron sulfide, zirconium oxide, powdered metal, quartz, silicon oxide, powdered rubber, alumina, chromium oxide and vermiculite. Of these, those having lubricity, e.g., molybdenum disulfide, antimony trisulfide, cashew dust, graphite and antimony trioxide, contribute to improved resistance to wear and reduced counter surface attack, and conversely those having an abrasive effect, e.g., zirconium silicate, iron oxide, zirconium oxide, quartz, silicon oxide, alumina and chromium oxide, contribute to improved friction characteristics. They may be used either individually or in combination. When incorporated with silicon oxide, or silica, as the filler component, the present invention uses amorphous silica or diatomaceous earth (amorphous powder) but not crystalline silica, which may cause carcinogenesis or silicosis, viewed from the object of the present invention.

Content of the filler is not limited for the present invention, and adequately selected depending on type of the specific filler component. However, it is normally around 5 to 60% by volume based on the whole non-asbestos-based friction materials composition, preferably 10 to 40%.

### 4. Other, optional materials

The non-asbestos-based friction materials of the present invention may be incorporated with one or more optional materials commonly used for friction materials, as required, in addition to the fibrous base, binder and filler, within limits not harmful to the object of the present invention. These include, but not limited to, coke and phosphorus-based lubricant.

### 5. Process for producing the non-asbestos-based friction materials

In the process of the present invention for producing the non-asbestos-based friction materials, the components, e.g., the fibrous base, binder and filler, are uniformly mixed with each other by a mixer, e.g., Henschel, Redige or Eirich mixer, to obtain the powder for molding, which is preliminarily formed in a forming mold (at 9.8 to 29.4MPa for 0.5 to 3 minutes), and then formed into a shape at 130 to 200°C and 9.8 to 98.0MPa (100 to 1000kg/cm²) for 2 to 15 minutes, preferably formed into a shape at 18.7 to 39.2MPa (150 to 400kg/cm²) for 4 to 10 minutes.

The formed shape is thermally treated (for post-curing) at 140 to 250°C for 2 to 48 hours, preferably 150 to 220°C for 6 to 12 hours, and, as required, spray-coated, baked and ground to produce the final product.

When a disk pad for automobiles or the like is to be produced, the preliminarily formed product is placed on an iron or aluminum plate (back material) washed, surface-treated and coated with an adhesive agent beforehand, and the resultant assembly is formed in a forming mold, thermally treated, spray-coated, baked and ground.

The non-asbestos-based friction materials of the present invention can be suitably used for various purposes, e.g., brake lining, clutch facing, disk pads and brake blocks for automobiles, large-size trucks, railway cars and various industrial machines.

### EXAMPLES

The present invention is described in more detail by EXAMPLES and COMPARATIVE EXAMPLES, which by no means limit the present invention.

In EXAMPLES and COMPARATIVE EXAMPLES, the friction materials was evaluated by the procedures and according to the standards described below.

Friction characteristics (friction coefficient), extent of counter surface attack and characteristics related to abnormal sound were evaluated by the friction test in accordance with JASO C406 under the conditions of braking initial speed: 50km/hour, braking slowing-down speed: 0.3G, number of braking actions: 2000, and temperature of the brake before working: 100 and 200°C, to measure friction coefficient and extent of wear of the plane (rotor) the friction materials faced, and evaluate extent of abnormal sound according to the following standards:
- ⓞ :: Very good (No abnormal sound generated)
- o :: Good (Extent of abnormal sound clearing the passing mark)
- Δ :: Slightly bad (Abnormal sound generated to some extent)
- × :: Not passing (Abnormal sound generated excessively)

The derusting performance were evaluated by the derusting test in accordance with JASO C406 under the conditions of braking initial speed: 50km/hour, braking slowing-down speed: 0.15G, number of braking actions: 200, and temperature of the brake before working: 150, to observe the plane (rotor) the friction materials faced, and evaluate extent of rust-grinding of the plane rusted beforehand according to the following standards:
- ⓞ :: Rust completely removed
- o :: Rust removed almost completely
- Δ :: Rust remains to some extent
- × :: Rust remained

The characteristics related to environmental load were also evaluated in accordance with the Law Concerning Reporting, etc. of Release to the Environment of Specific Chemical Substances and Promoting Improvements in Their Management, and judged according to the following standards:
o : Contains no specific chemical substance stipulated by the laws and regulations
× : Contains a specific chemical substance stipulated by the laws and regulations

### [EXAMPLES 1 to 6 and COMPARATIVE EXAMPLES 1 to 5]

The components for each of the friction materials compositions given in Table 1, comprising the fibrous base, binder and filler, were uniformly mixed by an Eirich mixer, and preformed under a pressure of 29.4MPa (300kg/cm²) for 30 seconds in a pressure mold. The preformed shape was molded at 160°C and 29.4Mpa (300kg/cm²) for 10 minutes, and then postcured at 200°C for 10 hours (post-curing), to produce the brake pads for automobiles in each of EXAMPLES 1 to 6 and COMPARATIVE EXAMPLES 1 to 5. Each brake pads was tested in accordance with the procedures described above. The results are given in Table 1.

The silica fibers used in each of EXAMPLES 1 to 6 as the chopped strands of amorphous silica were 1mm long and 9µm in diameter, and comprised 94.7% of silica, 4.5% of alumina and 0.3% of sodium oxide.

The whiskers used in COMPARATIVE EXAMPLES 1 and 2 were potassium titanate fibers, 20µm long and 0.6µm in diameter (Otsuka Chemical's Tofica TM). The ceramic fibers used in COMPARATIVE EXAMPLES 3 and 5 were of crystalline silica, 80µm long and 2 to 4µm in diameter (Nippon Steel Chemical's thermal Ceramics SC Bulk TM). The glass fibers used in COMPARATIVE EXAMPLES 3 and 4 were 3mm long and 9µm in diameter (Central Glass's EOS Series).

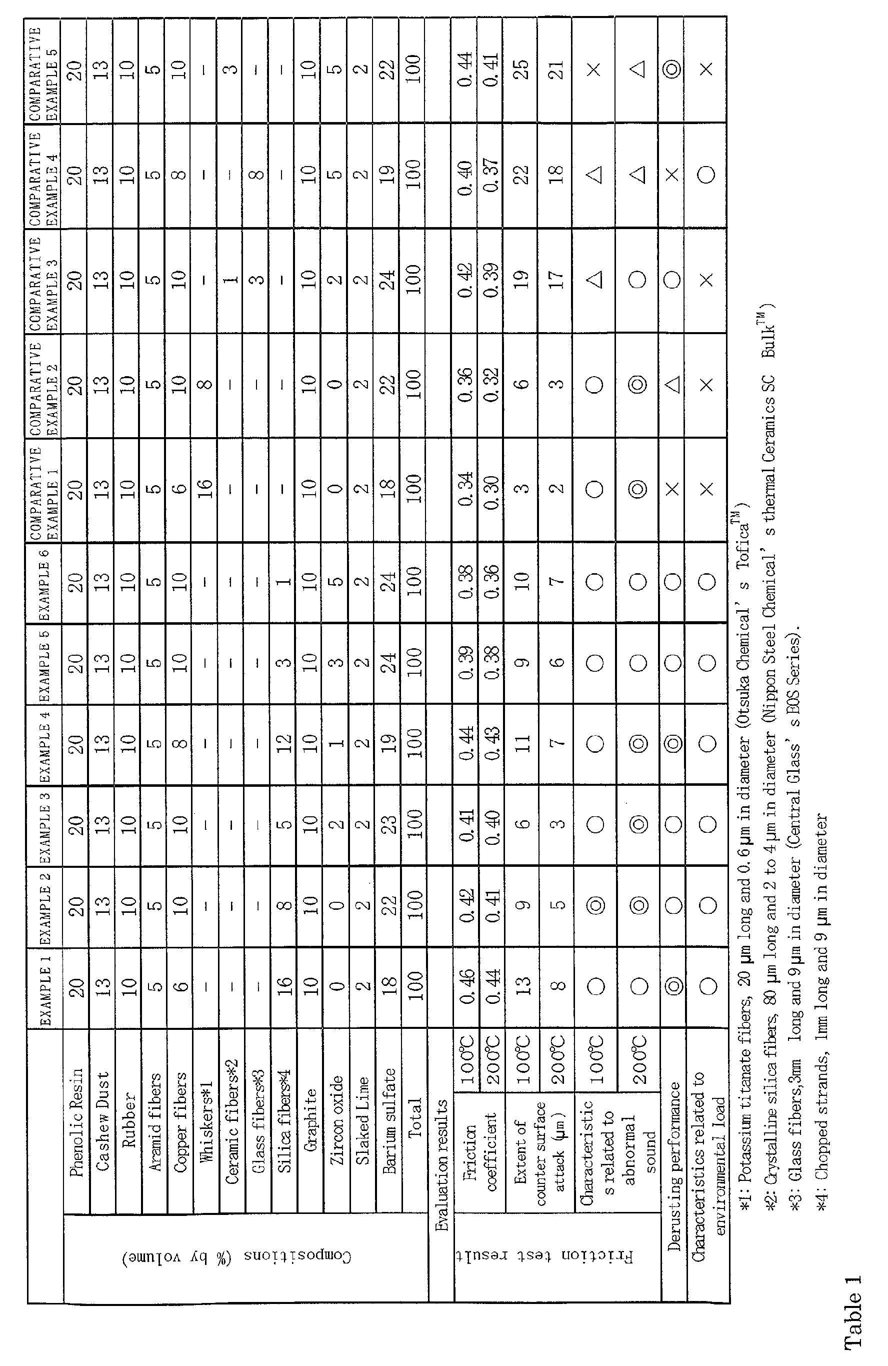

As shown in Table 1, the friction materials prepared in COMPARATIVE EXAMPLES 1 to 5, which directly used the conventional component, e.g., crystalline silica, for the fibrous base are inferior to those prepared in EXAMPLES 1 to 6 in the friction test results, and evaluation results of the derusting and environmental load characteristics. More specifically, the one prepared in COMPARATIVE EXAMPLE 5, which comprised crystalline silica, greatly counter surface attack, and was unsatisfactory in the abnormal sound and environmental load characteristics, although good in friction coefficient and derusting performance.

By contrast, each of those prepared in EXAMPLES 1 to 6, which had the fibrous base comprising chopped strands of amorphous silica, 1mm or more but less than 3mm long and 6µm or more but less than 10µm in diameter, showed good results in the friction test results (friction coefficient, counter surface attack and abnormal sound characteristics), and evaluation results of the derusting and environmental load characteristics. As such, they should cause no practical problems.

The non-asbestos-based friction materials of the present invention exhibits notable advantages of excellent friction performance, lower tendency of counter surface attack and excellent rust-proof performance while causing no carcinogenesis or pneumoconiosis (in particular silicosis) in humans by containing, at a specific content, chopped strands of amorphous silica, 1mm or more but less than 3mm long and 6µm or more but less than 10µm in diameter, and hence is of high quality. As such, it can be suitably used for brakes, clutches or the like for automobiles, large-size trucks, railway cars and various industrial machines.

## Claims

1. Non-asbestos-based friction materials made by molding and curing a composition comprising, as the major components, a fibrous base, binder and filler, wherein the fibrous base has a length of 5µm or more and diameter of 3µm or less; is free of inorganic fibers having an aspect ratio (fiber length/fiber diameter) of above 3; and contains chopped strands of amorphous silica, 1mm or more but less than 3mm long and 6µm or more but less than 10µm in diameter.

2. The non-asbestos-based friction materials according to Claim 1, wherein said chopped strands of amorphous silica are contained at 1 to 16% by volume on the whole friction materials.

3. The non-asbestos-based friction materials according to Claim 1 or 2, wherein said amorphous silica contains alumina and sodium oxide as impurities at below 5% and below 0.5%, respectively.
